(19) Europäisches Patentamt / European Patent Office / Office européen des brevets

(11) **EP 4 311 631 B1**

(12) **EUROPEAN PATENT SPECIFICATION**

(45) Date of publication and mention
of the grant of the patent:
**16.04.2025  Bulletin 2025/16**

(21) Application number: **23181995.4**

(22) Date of filing: **28.06.2023**

(51) International Patent Classification (IPC):
**B25J 9/10** *(2006.01)*      **B25J 17/02** *(2006.01)*

(52) Cooperative Patent Classification (CPC):
**B25J 17/0258; B25J 9/104**

(54) **DIFFERENTIAL BALL JOINT WITH CABLE TRANSMISSION, IN PARTICULAR FOR ROBOTICS**

DIFFERENTIALKUGELGELENK MIT KABELÜBERTRAGUNG, INSBESONDERE FÜR DIE ROBOTIK

ARTICULATION À ROTULE DIFFÉRENTIELLE AVEC TRANSMISSION PAR CÂBLE, EN PARTICULIER POUR LA ROBOTIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **27.07.2022  IT 202200015813**

(43) Date of publication of application:
**31.01.2024  Bulletin 2024/05**

(73) Proprietor: **DIGIMATIC ROBOTICS S.r.l.**
**85100 Potenza (IT)**

(72) Inventor: **Bruni, Francesco**
**85100 POTENZA (IT)**

(74) Representative: **Perronace, Andrea et al**
**Jacobacci & Partners S.p.A.**
**Via Tomacelli, 146**
**00186 Roma (IT)**

(56) References cited:
**EP-A1- 3 715 061      JP-A- 2018 065 198**
**JP-A- S6 176 296      US-A- 5 697 256**

## Description

The present invention is directed to a differential spherical joint with cable transmission, in particular for robotics.

## Background art

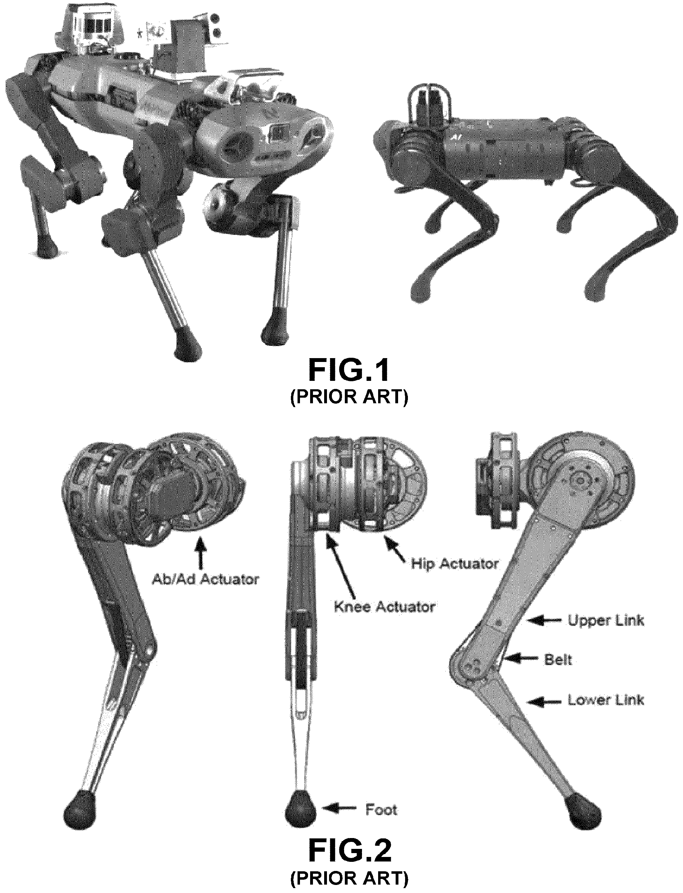

In robots moving on legs (see Fig. 1, for example), the driving torques required to ensure locomotion are quite high and are a challenge for modern electromechanical actuators. Assuming the same design, torques are directly proportional to the weight of the robot itself. Therefore, it is crucial to have robots with lightweight structural, mechanical and electromechanical elements in line with the background art of this field. Carbon fiber or lightweight metals such as aluminum or titanium are often used for the mechanical parts. Particularly critical is the weight contribution due to the electrical actuators, for which dedicated designs optimized to obtain a high weight-power ratio (e.g., MIT Cheetah) are generally used.

When considering a hip spherical joint of a four-legged robot (e.g., that shown in Fig. 2), it can be noted that the torques involved during walking are generally greater in the direction of the motion and less strong in the direction perpendicular to the motion. On the other hand, under certain circumstances, high torque can be required in the direction perpendicular to the one typical of the motion, e.g., under stabilization circumstances following a loss of balance, in the case of lateral motion or upon the interaction with the environment (due to lateral pushes or blows, for example). To date, two identical actuators are used for two degrees of freedom of movement: perpendicular and parallel to the motion. This configuration results in actuator oversizing, consequent robot weight increase, as well as underuse of one of the two actuators.

Specifically, the typical configuration of the hip joint present in most four-legged robots consists of two brushless motors having large diameter (due to the shape thereof, referred to as pancakes) arranged at 90° to each other to provide the driving torque required in the two motion directions. In addition to having increased weights and volumes, this configuration does not allow utilizing the combined torque obtained by the two motors. In order to fully use the combined driving torque of the two motors, a differential joint with two inlets and two outlets is to be used. These joints are usually made with helical tooth bevel gears. It is thus possible to utilize the dual power input, but with the disadvantage of introducing significant weights and volumes, as mentioned above.

An alternative solution, shown in Fig. 3, is a joint with cable transmission and is described in U.S. Patent US5046375A (Figure 8 of the Patent Application). Here, the cable transmission does not aim at combining torques, rather transferring the motion to the joints by reducing the number of revolutions of the actuators while keeping the actuators in the base (not on the limb).

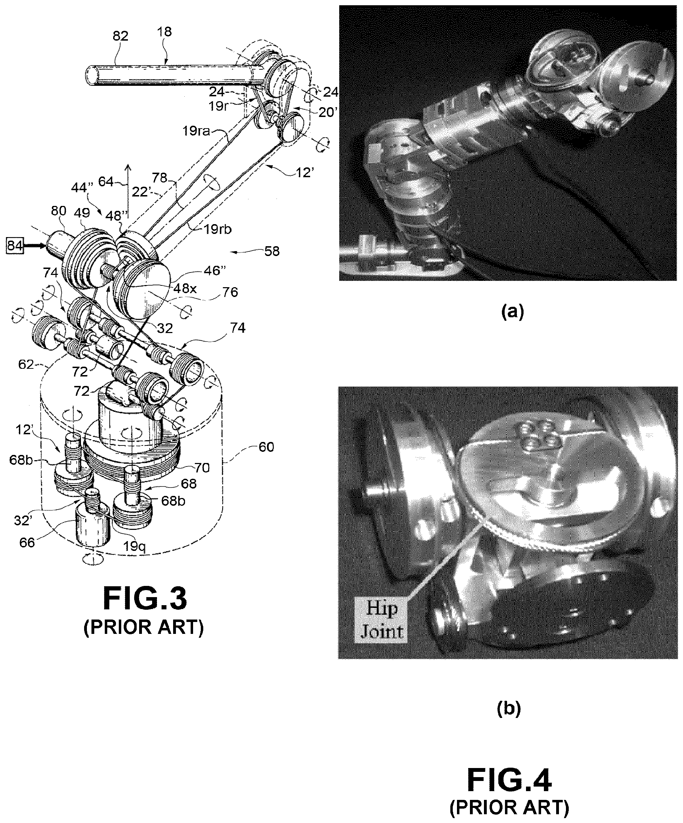

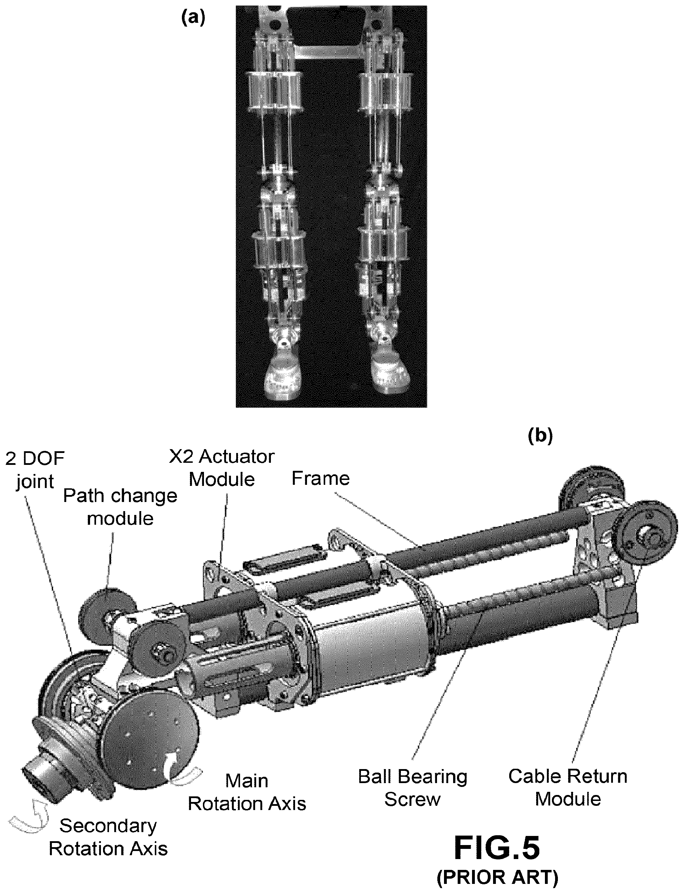

Another studied case relating to differential joints is the iCub project of the Istituto Italiano di Tecnologia (see Fig. 4, in (a) the whole arm, in (b) the joint in greater detail), where a differential cable joint was used for articulating the arms and legs of a robot. Again, a further example of application of differential cable joints is the SHERPA project (shown in Fig. 5) based on cable transmission from the motor to the differential joint, capable of utilizing the dual actuation to increase the power of the output torque. However, this solution only allows limited mobility, and since it is not very compact, is difficult to integrate in a four-legged robot. With this type of joint, the possible rotations are oriented as shown in Fig. 5, the main axis (main rotation axis) is perpendicular to the direction of the cables transmitting the motion, therefore the actuators must also be along the same direction. This configuration makes the joint difficult to use for the limbs of a four-legged robot, where there is a need for the rotation directions as shown in Fig. 2.

Another example is given by Patent Document JPS6176296, which describes a joint according to the preamble of appended claim 1, with pulleys and cables and without gears. The cables are tensioned forward and backward and this allows two perpendicular rotations of the joint.

Moreover, Patent Document US5697256 A describes a differential transmission mechanism, and more specifically a differential transmission in which two parallel inputs are converted into two orthogonal outputs through a hybrid gear and cable mechanism.

Moreover, Patent Document JP2018065198A describes a joint mechanism with three degrees of freedom, actuated by four cables, three main pulleys, and various return pulleys, in addition to a complex system of rotating sleeves and transmission pulleys.

Finally, Patent Document EP3715061 describes a wrist of a robot including driving and driven conical transmission and gear mechanisms.

The need is thus felt to find a compact, lightweight differential joint with cable transmission which can combine the driving torques of two actuators, reduce the weight of the robot, and thus increase the weight/power ratio while obviating the shortcomings of the background art.

## Purpose and object of the invention

It is the object of the present invention to provide a differential spherical joint with cable transmission for robotics which fully or partly solves the above problems and overcomes the drawbacks of the prior art.

The subject matter of present invention is a differential spherical joint with cable transmission for robotics.

## Detailed description of embodiments of the invention

## List of figures

The invention will now be described by way of non-limiting illustration, with particular reference to the figures of the accompanying drawings, in which:

- Fig. 1 shows an example of a four-legged robot according to the prior art;
- Fig. 2 shows an example of a robotic hip joint according to the prior art;
- Fig. 3 shows an example of robotic arm made with a cable joint according to the prior art;
- Fig. 4 shows an example of a differential hip joint with cable transmission according to the prior art;
- Fig. 5 shows a further example of a differential hip joint for making lower limbs of a robot according to the prior art;
- Fig. 6 shows a sectional view of a differential spherical joint according to an aspect of the invention;
- Fig. 7 shows a perspective view of the differential spherical joint according to an aspect of the invention;
- Fig. 8 shows an exploded perspective view of the differential spherical joint according to an aspect of the invention (note that the arrangement of the return pulleys is different from that of Fig. 7, thus having several possibilities according to the inventive concept);
- Fig. 9 shows a further perspective view of the exploded differential spherical joint without shafts (which can be replaced by other motion transmission means) according to an aspect of the invention;
- Fig. 10 shows the same exploded joint in Fig. 9, but rotated by 90° shown from the top, so as to appreciate the parts of the mechanism not better shown in the first view;
- Fig. 11 shows in (a) the use of two brushless motors directly coupled to the differential spherical joint, and in (b) the fastening of a leg to the differential spherical joint, according to an aspect of the invention; and
- Fig. 12 shows the use of two brushless motors coupled, by means of belts, to the differential spherical joint, according to an aspect of the invention.

It is here specified that elements of different embodiments can be combined together to provide further embodiments without restrictions while respecting the technical inventive concept, as those ordinarily skilled in the art effortlessly understand from this description.

The present description further relates to the prior art for the implementation thereof, concerning the detail features not described, such as elements of minor importance usually used in the prior art in solutions of the same type, for example.

When an element is introduced, it always means that there can be "at least one" or "one or more".

When a list of elements or features is given in this description, it means that the finding according to the invention "comprises" or alternatively "consists of" such elements.

When listing features within the same sentence or bullet list, one or more of the individual features can be included in the invention without connection to the other features on the list.

Two or more of the parts (elements, devices, systems) described herein can be freely associated and considered as part kits according to the invention.

## Embodiments

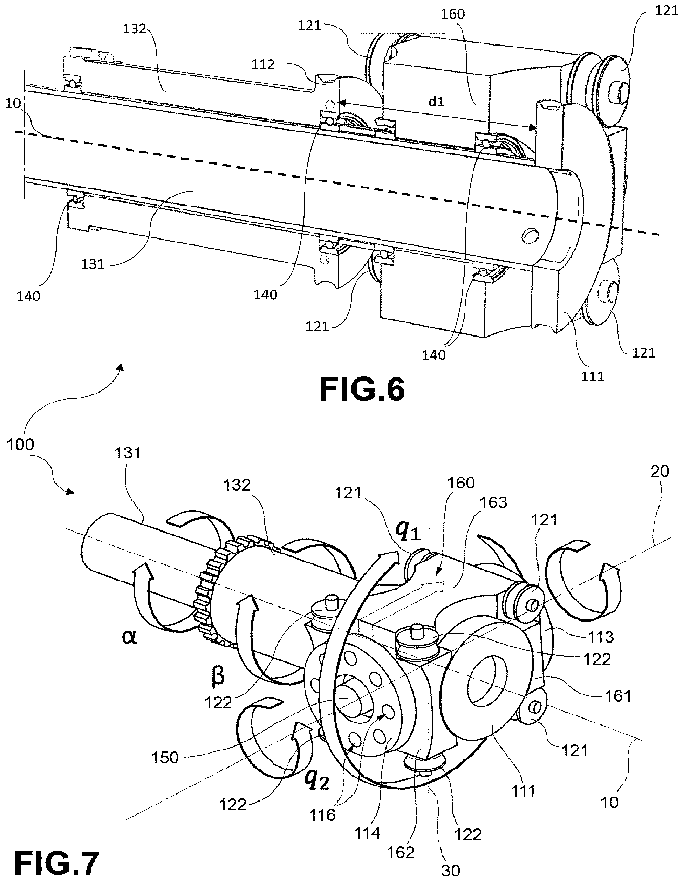

Certain embodiments of a differential spherical joint 100 according to the invention are shown in Figures 6 to 10. When a first and a second element are introduced, they will be interchangeable in the drawings together with the other elements functionally associated therewith, depending on the embodiments. It is noted beforehand that the arrangement of the return pulleys in Figures 6 and 7 is different from that in the subsequent figures, thus having several possibilities according to the inventive concept.

In a general embodiment, the differential spherical joint 100 comprises a plurality of pulleys, a plurality of rotary motion transmission means, which are connectable to respective actuators, and a plurality of tensioned flexible linear elements configured to transmit the motion between pulleys of said plurality of pulleys.

The plurality of pulleys comprises a first driving pulley 111 and a second driving pulley 112 arranged with the respective centers thereof at a predefined mutual distance d1 along a first axis 10 so that they can rotate independently of each other.

The plurality of rotary motion transmission means comprises a first transmission means 131 connected to said first driving pulley 111, as well as a second transmission means 132 connected to said second driving pulley 112 so that said first axis 10 is the axis with respect to which the first transmission means 131 and the second transmission means 132 transmit the respective rotary motion.

The first transmission means 131 and the second transmission means 132 can be cables or gear wheels or even shafts. This latter case is the one shown, where a first shaft 131 and a second shaft 132 are arranged along the first axis 10; in particular the figures show the example case in which the first shaft 131 has a smaller diameter and is at least partially surrounded by said second shaft 132 having a larger diameter. The two shafts can also be arranged so as to extend from the respective driving pulley in opposite directions along axis 10; in this case, they do not necessarily need to have different diameters. The shafts 131, 132 can be moved by two independent actuators (not shown in the figure) and are adapted to transmit the input power provided to joint 100. In this embodiment, the pulleys 111, 112 can comprise a through opening 115 adapted and configured to at least partly house a portion of the inner shaft 131 so that the input power provided to the joint through shaft 131 can be transmitted to pulley 111, while shaft 132 transmits the motion to pulley 112.

Returning to the plurality of pulleys, it further comprises a first driven pulley 113, 114 rotatable along a second axis 20 perpendicular to said first axis 10. The first driven pulley can indifferently be pulley 113 or pulley 114.

Describing now said plurality of tensioned flexible linear elements, it comprises a first tensioned flexible linear element 151 and a second tensioned flexible linear element 152 which perform a complete revolution on said first driving pulley 111 and on said second driving pulley 112, respectively, to then exit at each time in diametrically opposite points of the respective driving pulley 111, 112, wind about said first driven pulley 113, 114, and return to said respective driving pulley 111, 112, thus forming a closed path. In the case of one driven pulley alone, there is a single outlet of the cable in each diametrically opposite point; in the case of two driven pulleys, as shown later, the outlet of the cable in each diametrically opposite point is in opposite directions on the plane of the pulley.

The first tensioned flexible linear element 151 and said second tensioned flexible linear element 152 are chosen between chains, belts or other similar transmission systems, or cables. This latter case is that shown in the figures, where there is a first tensioned cable 151 and a second tensioned cable 152. In general, "flexible" means something that can be bent, but that is not necessarily elastic. "Linear" means something that has an extension along an entirely or partly straight or curved line. A "flexible linear element" thus defines a curvilinear extension, and the fact that it is tensioned is necessary for the ability thereof to transmit the motion.

In order to achieve the travel of such cables or tensioned elements, the plurality of pulleys further comprises first four return pulleys 121, 122 (121 or 122 depending on which driven pulley is chosen, if one alone or the other, or even both as shown below and depicted in the drawings) on which said first 151 and second 152 tensioned flexible elements slide over about a quarter of revolution and go each time from the first or second driving pulley 111, 112 to the first driven pulley 113, 114 (depending on the cases of one or more driven pulleys, the case with two driven pulleys being only depicted in the drawings).

These first four return pulleys 121, 122 have rotation axes which are parallel - within a predefined tolerance angle - to the first axis 10, or parallel - within said predefined tolerance angle - to a third axis 30 perpendicular to both said first axis 10 and said second axis 20, as depicted in the drawings. The rotation axes of the return pulleys are thus always perpendicular to the rotation axis of the driven pulleys, an arrangement which allows obtaining the effects and advantages of the invention, which are better specified below.

In an advantageous embodiment of the invention, the return pulleys (in each embodiment of the invention, with 4 or 8 pulleys, for example) can have mutually equal dimensions. The tolerance angle is advantageous in preserving the input tangency in the driving or driven pulleys. For example, such an angle can vary from 0 to 5°. The important feature is that the cables do not slip off any of the pulleys, those skilled in the art thus knowing how to accurately determine the deviation or tolerance angle with respect to the axes 10, 30.

As shown in the figures (considering that there are two driven pulleys, not both required according to the invention), the first four return pulleys 121, 122 are arranged on the side of said first driven pulley 113, 114 at the corners of a quadrilateral inscribing said first driven pulley 113, 114. "At" means that the positions can be detached from the ideal vertices of the quadrilateral, but in any case, always close to the driven pulley, in particular between the driven pulley and the driving pulleys.

In an advantageous embodiment of the invention, in combination with all other embodiments described herein, the driving and driven pulleys 111, 112, 113, 114 can have a diameter D of equal extension so as not to reduce the input driving torque.

As shown in the figures, there is provided a central body 160 configured to house and support at least said driven pulleys 113, 114 (one or more thereof depending on the embodiments) and said return pulleys 121, 122 and to freely rotate about the first axis 10 with respect to both said first 111 and second 112 driving pulleys. The return pulleys can be those at 121 for winding the cables onto the first driven pulley 114 and/or those at 122 for winding the cables onto the second driven pulley 113, as specified below.

As mentioned above, in the embodiment shown in the figures, said plurality of pulleys further comprises a second driven pulley 113 rotatable along said second axis 20 placed at a predefined distance d2 from said first driven pulley 114.

Here, there are second four return pulleys 122 on which the first 151 and second 152 tensioned flexible elements (cables in the drawings) further slide over about a quarter of revolution and go each time from the first and second driving pulleys 111, 112 to both the first driven pulley 114 and the second driven pulley (113), respectively.

The first four return pulleys (121) have rotation axes which are parallel - within a predefined tolerance angle - to said first axis (10), while the second four return pulleys (122) have rotation axes which are parallel - within said predefined tolerance angle - to said third axis (30).

As shown in the drawings, the second four return pulleys 122 are arranged on the side of said second driven pulley 113 at the corners of a quadrilateral inscribing said second driven pulley 113, again meaning that the positions thereof can be detached from the ideal vertices of the quadrilateral, but in any case, they will always be close to the driven pulley, in particular between the driven pulley and the driving pulleys.

As shown in the drawings, where there are both the first and second driven pulleys, the first tensioned flexible linear element 151 and the second tensioned flexible linear element 152 (the cables shown, for example) exit in opposite directions from said two diametrically opposite points from the respective driving pulley 111, 112, pass through two of the first return pulleys 121 and two of the second return pulleys 122, wind about said first driven pulley 114 and said second driven pulley 113, and finally return to said respective driving pulley 111, 112, thus forming a closed path.

With the quadrilateral arrangement of the return pulleys, the distance between two consecutive return pulleys in the direction of the returned cable is always at least equal to the diameter of the main pulleys, with a positive effect in that the return pulleys do not obstruct the main pulleys.

In order to allow a safer and more efficient motion transmission, the cables can be fastened in one or more fastening points 118 on each of said first driving pulley 111, second driving pulley 112, first driven pulley 114, and second driven pulley 113.

Describing now the central body 160, it can conveniently be in the shape of a six-sided cuboid with:

- two opposite first faces 161 perpendicular to the first axis 10, comprising two respective recesses with cylindrical section for housing the driving pulleys 111, 112;
- two opposite second faces 162 perpendicular to the second axis 20, comprising two respective hubs 150 configured to support the driven pulleys 113, 114; and
- two opposite third faces 163 perpendicular to the third axis 30.

In particular, according to a more specific embodiment of the invention:

- on each of the two first faces 161 there are arranged two first return pulleys 121 at the corners between the two first faces 161 and one of the two second faces 162 oriented in a first direction of axis 20; and

- on each of the two third faces 163 there are arranged two second return pulleys 122 at the corners between the third faces 163 and one of the second faces 162 oriented in a second direction of axis 20, opposite to said first direction.

It should be noted that each of the first and second return pulleys 121, 122 has a respective rotation axis perpendicular to the face 161, 162, 163 on which it is located, which allows achieving the effects and advantages of the invention, as better specified below.

In each embodiment, each return pulley can have a rotation axis perpendicular to the plane (face of support 160) on which it is located.

For the purposes of a use of the joint described above, the first driven pulley 114 and the second driven pulley 113 comprise a plurality of holes 116 configured to receive through screws for integrally coupling the differential spherical joint 100 to the limb of a robot so as to transmit the input power provided to the joint to such a robot limb or leg. In a particularly advantageous embodiment of the invention, the holes 116 can be arranged circularly over the surface of the driven pulley, about axis 20, so as to ensure a uniform fastening. For example, there can be from 6 to 10 holes 116, e.g., 8 holes for each driven pulley 113, 114.

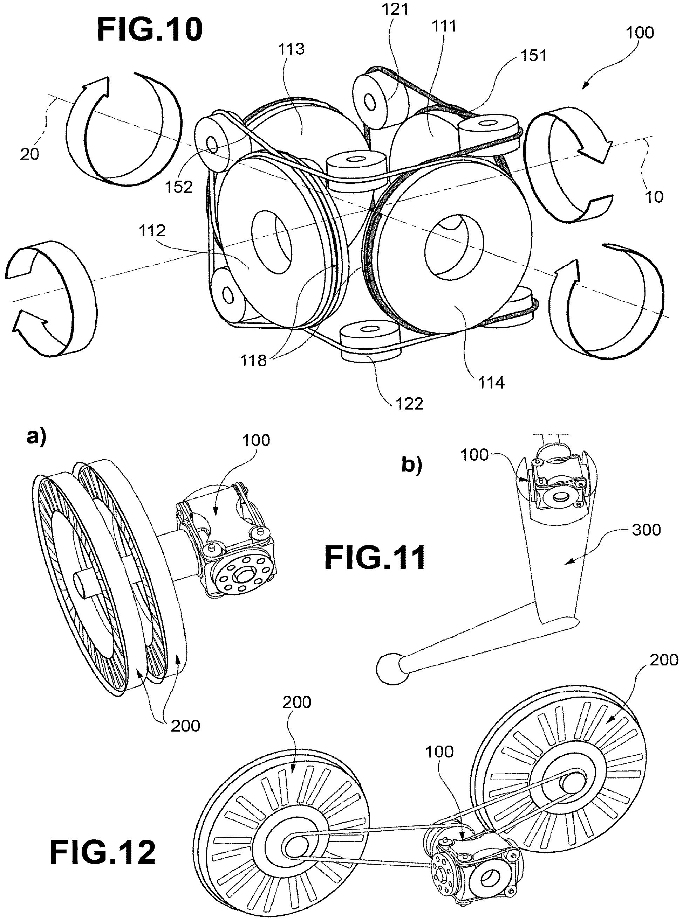

The robot, a limb of which is shown in Fig. 11 (b), can comprise one or more limbs 300 coupled to respective one or more differential spherical joints 100 as described above. Such one or more limbs 300 can be coupled to respective one or more differential spherical joints 100 on said first 113 and said second 114 driven pulleys.

The limb can be moved in two perpendicular directions according to the following alternative steps:

B1. actuating said first transmission means 131 and said second transmission means 132 with rotations in same directions to obtain the movement of limb 300 on a first plane; or
B2. actuating said first transmission means 131 and said second transmission means 132 with rotations in opposite directions to obtain the movement of limb 300 on a second plane perpendicular to the first plane.

By utilizing the versions of this inventive joint geometry, it is possible to transmit, through two cables 151, 152 (one shown with a solid line and another shown with a dashed line), the rotations of the driving pulleys to the driven pulleys. Indeed, a rotation equal to that of the driving pulley 111 is transmitted to the driven pulley 113 and equal and opposite to pulley 114. At the same time, it is possible to transmit a rotation equal to that of the driving pulley 112 to the driven pulley 113 and equal and opposite to pulley 114. This is obtained because:

- Cable 151 performs a complete revolution about pulley 111 and passing through the return pulleys 121, 122 to the top corners, enters in the driven pulleys in a different manner; in particular, it enters in the driven pulley 113 from the top (because the return pulley 122 has its axis perpendicular to the plane of the axes 10-20), while it enters in pulley 114 from the bottom (because the related return pulley 121 has its rotation axis parallel to axis 10);
- Cable 152 performs a complete revolution about pulley 112 and passing through the return pulleys 121, 122 to the top corners, enters in the driven pulleys in a different manner; in particular, it enters in the driven pulley 113 from the top (because the return pulley 122 has its axis perpendicular to the plane of the axes 10-20), while it enters in pulley 114 from the bottom (because the related return pulley 121 has its rotation axis parallel to axis 10).

Preferably, the cables enter in the driven pulleys in a tangential manner. The arrangement and orientation of the return pulleys determine the path of the cables 151, 152 on the driven pulleys. After the first complete revolution on the driving pulleys, again due the arrangement of the return pulleys, the cables perform a second complete revolution on the driving pulleys. Conveniently, there is a fastening point 118 for each complete revolution.

It is thus possible to obtain a synchronous movement of the driven pulleys 113, 114 for any rotation of the driving pulleys 111, 112. The driven pulleys are not connected directly, rather only by cable. Since the rotations of the driving pulleys 111, 112 are constrained to transmit the rotation to the driven pulleys 113, 144 themselves, the central body 160 will be rotated about axis 10 by an angle proportional to the difference between the rotations of the two driving pulleys 111 and 112.

The cables 151, 152 are adapted to move the pulleys so as to transfer the input power provided by the shafts 131, 132 to the pulleys. The cables 151, 152 can be fastened to one of the driving pulleys 111, respectively, and can act on both driven pulleys 112. Preferably, the two cables are fastened in at least one point on each pulley 111, 112, 113, 114 to avoid the cable from slipping on the pulley. If chains or toothed belts are used instead of the cables (as possible in all embodiments of the invention), then the fastening points are not required since the pulleys are also toothed (at least the driving and driven ones; it is also possible for the return ones to be toothed).

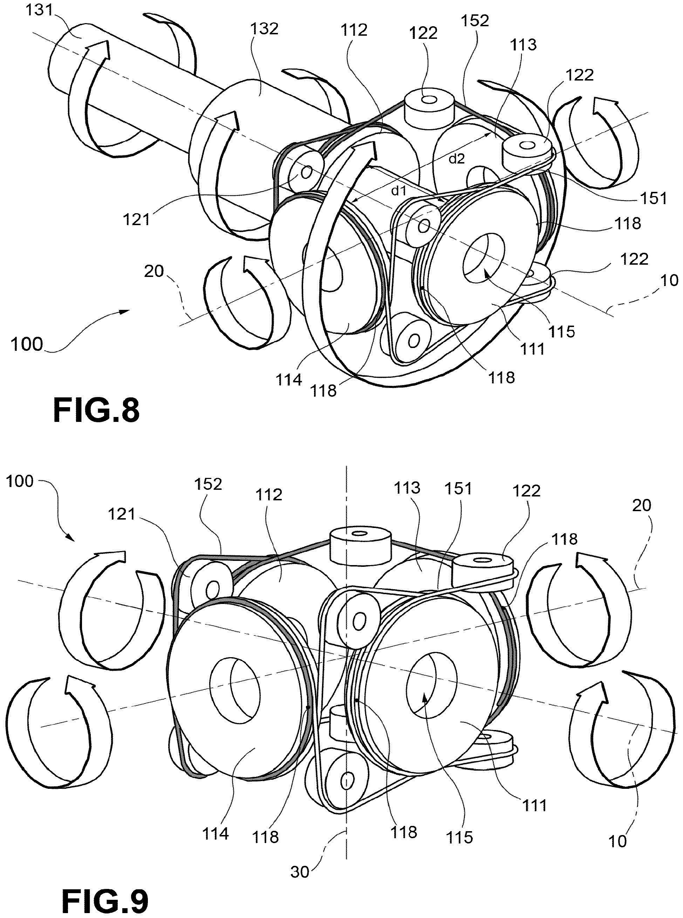

It should be remembered that Figures 9 and 10 are two views of the same joint, but rotated by 90° in a clockwise direction, looking at it from the top.

Joint 100 can comprise, in any of the embodiments described herein, a cable tensioning and fastening system (not shown in the figures) which can be positioned inside the main pulleys in order not to limit the rotation thereof. Even if the cables 151, 152 are tensioned using the tensioning and fastening system, they can be fastened to each pulley in order to decrease the risk of slipping and obtain higher repositioning accuracy. Each cable is fastened to one of the two driving pulleys 111, 112 and both driven pulleys 113, 114. The path of each cable to the pulleys and the related fastening points 118 ensure the correct operation of the mechanism.

The embodiment of the invention shown in Fig. 7 indicates the positive direction of the directions of the arrows describing the rotation about axis 10 and axis 20; such a convention will be used as a reference hereinbelow. Two types of movements corresponding to the two degrees of freedom (see Fig. 7) can occur with the joint described and/or claimed:

1. The driving pulleys 111, 112 rotate in the same direction and by the same angle: here, the cables do not slide on the pulleys and therefore all the components remain integral with one another; this is the rotation q1 about axis 10;

2. The driving pulleys 111, 112 rotate by the same angle but in opposite directions: the cables slide and there is a rotation of the driven pulleys 113, 114, i.e., the rotation q2 about axis 20.

In a preferred embodiment of the invention, joint 100 can perform one complete rotation q1 of ± 360° about axis 10 and one rotation q2 of ± 90° with respect to axis 20, thus sweeping a hemisphere. Joint 100 can thus take positions that are described by a hemisphere. The embodiment of the invention shown in Fig. 7 indicates the positive direction of the directions of the arrows describing the rotation about axis 10 and axis 20; such a convention will be used as a reference for the equations hereinbelow.

To better describe the effect of the rotations in detail, $\alpha$ indicates the rotation of the inner shaft 131 with respect to a set of three which is integral with the body of the robot which utilizes the joint according to the invention, and $\beta$ indicates the rotation of the outer shaft 132 (Fig. 6) with respect to the same set of three. The rotation q1 is described by the relation:

$$q1 = (\alpha + \beta)/2$$

since, as mentioned, the two rotations must have the same module and direction in order to rotate the whole joint.

The following applies instead for q2:

$$q2 = (\alpha - \beta)/2$$

A combination of the two movements allows positioning the joint in the desired point.

It can be shown that the relationship between the input torques $\tau\alpha$ and $\tau\beta$ and the output torques $\tau1$ and $\tau2$ is given by:

$$\tau1 = \tau\alpha + \tau\beta$$

$$\tau2 = \tau\alpha - \tau\beta$$

The value of the maximum output torque can thus be double the maximum torque deliverable by a single actuator. This factor is a significant advantage for the overall weight, size and compactness of joint 100.

According to the invention, it is possible to use the joint with a method for moving a limb of a robot in two perpendicular directions, characterized in that the following steps are performed:

A. providing a robot 300 as described above;
B. alternatively:

B1. actuating said first transmission means 131 and said second transmission means 132 with rotations in same directions to obtain the movement of limb 300 on a first plane; or

B2. actuating said first transmission means 131 and said second transmission means 132 with rotations in opposite directions to obtain the movement of limb 300 on a second plane perpendicular to the first plane.

**Advantages of the invention**

Joint 100 has several advantages as compared to the materials and technology of the prior art:

- Shafts of the concentric driving pulleys: the solution adopted for transmitting the motion from the actuators of the shafts to the limb of a robot with the above system of two concentric shafts allows reducing the volume to the diameter alone of the outer shaft; the joint can thus be positioned to be cantilevered from the body of a robot, continuing to be controlled from the inside;
- Cable transmission: the transmission of the motion from the driving pulleys to the driven pulleys is performed with a (preferably pretensioned) cable which cancels the mechanical clearances, thus ensuring a very high accuracy of the movement; moreover, the cable transmissions ensure a higher weight/power ratio than traditional solutions and do not need to suitably position the actuator: here, the weight of the actuator can be moved to the body of the robot, thus decreasing the moving masses on the joint;
- Dual actuator for moving the joint: since the transmission of the motion only occurs if both actuators actively work, the effort required to reposition the joint is distributed on both actuators: this implies that, with the transmitted power being equal, smaller actuators can be used, thus better distributing the masses thereof on the body of the robot. Summarizing, with the actuator weight and volume being the same, there is a greater maximum torque;
- Facilitated wiring: the inner hollow shaft 131 allows the passage, between the body and leg of a robot, of wiring/service pipes, which do not interfere with the rotation;
- Through inner shaft 131: the hollow inner shaft passes in the central body 160 and is fastened thereto by means of two ball bearings 140 (Fig. 6); from a mechanical viewpoint, this gives the joint solidity, which is thus capable of easily bearing the weight of the robot limb without the need for an external structural casing required in gear mechanisms.
- Load-bearing inner shaft 131: the hollow inner shaft can be mounted on bearings inside the robot and can act as a load-bearing structure even for the outer shaft 132 (always by means of suitable bearings) as well as for the robot leg.

- Synchronous rotation of the driven pulleys 113, 114: having two synchronous pulleys at the joint outlet allows fastening leg 300 in two points, thus ensuring more solidity and less volume (as shown in Fig. 11b).
- Materials used: by virtue of the lighter joint structure, all components lend themselves to being made of carbon fiber or composite materials such as PEEK and PA6. These materials are generally made by means of additive manufacturing, which allows making details that cannot be made using conventional techniques (e.g., curved holes for the passage of the cables into the pulleys).
- Long stroke on both rotations: the rotation range allowed is about 360° for the rotation q1 and about 180° for the rotation q2, thus being capable of describing a hemisphere; such a range is sufficient for a broad range of robotics.
- Absence of lubrication: since there are no mechanical parts in contact, lubrication is not required for the correct operation of the joint. The only parts in contact are bearings and cable, which do not require maintenance and/or lubricants.
- Low inertia: considering the project volumes, geometries and materials, the pulleys have low inertia to rotation, especially when compared with metal gears.
- Reverse drivability: low friction and lack of mechanical clearance allow an accurate transmission of the forces from the outlet to the inlet of the joint, which feature allows measuring the forces more accurately, starting from measuring the electric current circulating in the motors, thus avoiding the installation of dedicated force sensors on the joints.
- Independence of the type of motor used and positioning thereof: various designs are possible. For example, a particularly compact solution can use two brushless motors 200 coupled directly on the two shafts 131, 132 (as shown in Fig. 11a) or positioned in the body of the robot to redistribute the weight, such as in Fig. 12, for example.

**Claims**

1. A differential spherical joint (100) comprising a plurality of pulleys, a plurality of rotary motion transmission means connectable to respective actuators, and a plurality of tensioned flexible linear elements configured to transmit the motion between pulleys of said plurality of pulleys, wherein:

   - the plurality of pulleys comprises a first driving pulley (111) and a second driving pulley (112) arranged with the respective centers thereof at a predefined mutual distance (d1) along a first axis (10) so that they can rotate independently of each other;
   - the plurality of rotary motion transmission means comprises a first transmission means (131) connected to said first driving pulley (111) as well as second transmission means (132) connected to said second driving pulley (112) so that said first axis (10) is the axis with respect to which the first transmission means (131) and the second transmission means (132) transmit the respective rotary motion;
- the plurality of pulleys further comprises a first driven pulley (114) rotatable along a second axis (20) perpendicular to said first axis (10);
- said plurality of tensioned flexible linear elements comprises a first tensioned flexible linear element (151) and a second tensioned flexible linear element (152) which perform a complete revolution on said first driving pulley (111) and on said second driving pulley (112), respectively, to then exit at each time in diametrically opposite points of the respective driving pulley (111, 112), wind about said first driven pulley (114), and return to said respective driving pulley (111, 112), thus forming a closed path;
- the plurality of pulleys further comprises first four return pulleys (121, 122) on which said first (151) and second (152) tensioned flexible elements slide over about a quarter of revolution and go each time from the first or second driving pulley (111, 112) to the first driven pulley (114);
- the first four return pulleys (121) have rotation axes which are parallel - within a predefined tolerance angle - to said first axis (10);
- the first four return pulleys (121) are arranged on the side of said first driven pulley (113, 114) at the corners of a quadrilateral inscribing said first driven pulley (114);
wherein there is provided a central body (160) configured to house and support at least said first driven pulley (114) and said return pulleys (121) and to freely rotate about the first axis (10) with respect to both said first (111) and second (112) driving pulleys;
the joint being **characterized in that**:
said first transmission means (131) and said second transmission means (132) are a first shaft and a second shaft arranged along said first axis (10), in particular said first shaft (131) has a smaller diameter and is at least partially encircled by said second shaft (132) having a larger diameter.

2. A differential spherical joint according to claim 1, wherein said plurality of pulleys comprises:

- a second driven pulley (113) rotatable along said second axis (20) placed at a predefined distance (d2) from said first driven pulley (114);
- second four return pulleys (122) on which said first (151) and second (152) tensioned flexible elements further slide over about a quarter of revolution and go each time from the first and second driving pulleys (111, 112) to both the first driven pulley (114) and the second driven pulley (113), respectively;
- the second four return pulleys (122) have rotation axes which are parallel - within a predefined tolerance angle - to a third axis (30) perpendicular to said first axis (10) and said second axis (20);
- the second four return pulleys (122) are arranged on the side of said second driven pulley (113) at the corners of a quadrilateral inscribing said second driven pulley (113); and
- said first tensioned flexible linear element (151) and said second tensioned flexible linear element (152) exit in opposite directions from said two diametrically opposite points from the respective driving pulley (111, 112), pass through two of the first return pulleys (121) and two of the second return pulleys (122), wind about said first driven pulley (114) and said second driven pulley (113), and finally return to said respective driving pulley (111, 112), thus forming a closed path.

3. A differential spherical joint according to claim 1 or 2, wherein said first tensioned flexible linear element (151) and said second tensioned flexible linear element (152) are chosen between chains, belts, or other similar transmission systems.

4. A differential spherical joint according to one or more of claims 1 to 3, wherein said first tensioned flexible linear element (151) and said second tensioned flexible linear element (152) are cables.

5. A differential spherical joint according to claims 2 and 4, wherein said cables are fastened in one or more fastening points (118) on each of said first driving pulley (111), second driving pulley (112), first driven pulley (114) and second driven pulley (113).

6. A differential spherical joint according to one or more of claims 2 to 5, wherein the central body (160) has a six-sided cuboidal shape with:

- two opposite first faces (161) perpendicular to the first axis (10), comprising two respective recesses with cylindrical section for housing the driving pulleys (111, 112);
- two opposite second faces (162) perpendicular to the second axis (20), comprising two respective hubs (150) configured to support the driven pulleys (113, 114); and
- two opposite third faces (163) perpendicular to the third axis (30);
wherein:

- on each of the two first faces (161) there are arranged two first return pulleys (121) at the corners between the two first faces (161) and one of the two second faces (162) oriented in a first direction of the axis (20); and
- on each of the two third faces (163) there are arranged two second return pulleys (122) at the corners between the third faces (163) and one of the second faces (162) oriented in a second direction of the axis (20), opposite to said first direction;

and wherein each of the first and second return pulleys (121, 122) has a respective rotation axis perpendicular to the face (161, 162, 163) on which it is located.

7. A differential spherical joint according to one or more of claims 2 to 6, wherein the first driven pulley (114) and the second driven pulley (113) comprise a plurality of holes (116) configured to receive through screws for coupling the differential ball joint (100) to a limb of a robot.

8. A robot, wherein the robot comprises one or more limbs (300) coupled to respective one or more differential spherical joints (100) according to one of claims 1 to 7.

9. A robot according to claim 8, wherein the one or more differential spherical joints (100) are according to claim 1 or according to claim 4, and said one or more limbs (300) are coupled to respective one or more differential spherical joints (100) on said first (113) and said second (114) driven pulleys.

10. A method for moving a limb of a robot in two perpendicular directions, **characterized in that** the following steps are performed:

    A. providing a robot according to claim 8 or 9;
    B. alternatively:

    B1. actuating said first transmission means (131) and said second transmission means (132) with rotations in same directions to obtain the movement of the limb (300) on a first plane; or
    B2. actuating said first transmission means (131) and said second transmission means (132) with rotations in opposite directions to obtain the movement of the limb (300) on a second plane perpendicular to the first plane.

**Patentansprüche**

1. Differentialkugelgelenk (100), das eine Vielzahl von Riemenscheiben, eine Vielzahl von Drehbewegungsübertragungsmitteln, die mit jeweiligen Aktuatoren verbindbar sind, und eine Vielzahl von gespannten flexiblen linearen Elementen umfasst, die dazu ausgebildet sind, die Bewegung zwischen Riemenscheiben der Vielzahl von Riemenscheiben zu übertragen, wobei:

    - die Vielzahl von Riemenscheiben eine erste Antriebsriemenscheibe (111) und eine zweite Antriebsriemenscheibe (112) umfasst, die mit ihren jeweiligen Mittelpunkten in einem vordefinierten gegenseitigen Abstand (d1) entlang einer ersten Achse (10) angeordnet sind, so dass sie unabhängig voneinander rotieren können;
    - die Vielzahl von Drehbewegungsübertragungsmitteln ein erstes Übertragungsmittel (131), das mit der ersten Antriebsscheibe (111) verbunden ist, sowie ein zweites Übertragungsmittel (132) umfasst, das mit der zweiten Antriebsscheibe (112) verbunden ist, so dass die erste Achse (10) die Achse ist, in Bezug auf die das erste Übertragungsmittel (131) und das zweite Übertragungsmittel (132) die jeweilige Drehbewegung übertragen;
    - die Vielzahl von Riemenscheiben ferner eine erste Abtriebsriemenscheibe (114) umfasst, die entlang einer zweiten Achse (20) drehbar ist, die senkrecht zur ersten Achse (10) verläuft;
    - die Vielzahl der gespannten flexiblen linearen Elemente ein erstes gespanntes flexibles lineares Element (151) und ein zweites gespanntes flexibles lineares Element (152) umfasst, die jeweils eine vollständige Umdrehung auf der ersten Antriebsriemenscheibe (111) und auf der zweiten Antriebsriemenscheibe (112) ausführen, um dann jedes Mal an diametral entgegengesetzten Punkten der jeweiligen Antriebsriemenscheibe (111, 112) auszutreten, sich um die erste Abtriebsriemenscheibe (114) zu wickeln und zu der jeweiligen Antriebsriemenscheibe (111, 112) zurückzukehren, wodurch ein geschlossener Pfad gebildet wird;
    - die Vielzahl von Riemenscheiben ferner erste vier Umlenkscheiben (121, 122) umfasst, auf denen die ersten (151) und zweiten (152) gespannten flexiblen Elemente über ungefähr eine Viertelumdrehung gleiten und jedes Mal von der ersten oder zweiten Antriebsriemenscheibe (111, 112) zur ersten Abtriebsriemenscheibe (114) gelangen;
    - die ersten vier Umlenkscheiben (121) Drehachsen aufweisen, die - innerhalb eines vordefinierten Toleranzwinkels - parallel zu der ersten Achse (10) verlaufen;

- die ersten vier Umlenkscheiben (121) an der Seite der ersten Abtriebsriemenscheibe (113, 114) an den Ecken eines Vierecks angeordnet sind, das die erste Abtriebsriemenscheibe (114) einschließt;

wobei ein zentraler Körper (160) vorgesehen ist, der dazu ausgebildet ist, mindestens die erste Abtriebsriemenscheibe (114) und die Umlenkscheiben (121) aufzunehmen und zu stützen und sich in Bezug auf sowohl die erste (111) als auch die zweite (112) Antriebsriemenscheibe frei um die erste Achse (10) zu drehen;

wobei das Gelenk **dadurch gekennzeichnet ist, dass**:

die ersten Übertragungsmittel (131) und die zweiten Übertragungsmittel (132) eine erste Welle und eine zweite Welle sind, die entlang der ersten Achse (10) angeordnet sind, wobei insbesondere die erste Welle (131) einen kleineren Durchmesser aufweist und mindestens teilweise von der zweiten Welle (132), die einen größeren Durchmesser aufweist, umschlossen ist.

2. Differentialkugelgelenk nach Anspruch 1, wobei die Vielzahl von Riemenscheiben umfasst:

- eine zweite Abtriebsriemenscheibe (113), die entlang der zweiten Achse (20) drehbar ist und in einem vordefinierten Abstand (d2) von der ersten Abtriebsriemenscheibe (114) angeordnet ist;

- zweite vier Umlenkscheiben (122), auf denen die ersten (151) und zweiten (152) gespannten flexiblen Elemente über etwa eine Viertelumdrehung weiter gleiten und jeweils jedes Mal von der ersten und zweiten Antriebsriemenscheibe (111, 112) sowohl zur ersten Abtriebsriemenscheibe (114) als auch zur zweiten Abtriebsriemenscheibe (113) gelangen;

- wobei die zweiten vier Umlenkscheiben (122) Drehachsen aufweisen, die - innerhalb eines vordefinierten Toleranzwinkels - parallel zu einer dritten Achse (30) verlaufen, die senkrecht zu der ersten Achse (10) und der zweiten Achse (20) verläuft;

- wobei die zweiten vier Umlenkscheiben (122) an der Seite der zweiten Abtriebsriemenscheibe (113) an den Ecken eines Vierecks angeordnet sind, das die zweite Abtriebsriemenscheibe (113) einschließt; und

- wobei das erste gespannte flexible lineare Element (151) und das zweite gespannte flexible lineare Element (152) in entgegengesetzten Richtungen an den beiden diametral entgegengesetzten Punkten der jeweiligen Antriebsriemenscheibe (111, 112) austreten, durch zwei der ersten Umlenkscheiben (121) und zwei der zweiten Umlenkscheiben (122) verlaufen, sich um die erste Abtriebsriemenscheibe (114) und die zweite Abtriebsriemenscheibe (113) wickeln und schließlich zu der jeweiligen Antriebsriemenscheibe (111, 112) zurückkehren, wodurch ein geschlossener Pfad gebildet wird.

3. Differentialkugelgelenk nach Anspruch 1 oder 2, wobei das erste gespannte flexible lineare Element (151) und das zweite gespannte flexible lineare Element (152) aus Ketten, Riemen oder anderen ähnlichen Übertragungssystemen ausgewählt sind.

4. Differentialkugelgelenk nach einem oder mehreren der Ansprüche 1 bis 3, wobei das erste gespannte flexible lineare Element (151) und das zweite gespannte flexible lineare Element (152) Kabel sind.

5. Differentialkugelgelenk nach den Ansprüchen 2 und 4, wobei die Kabel an einem oder mehreren Befestigungspunkten (118) an jeder der ersten Antriebsriemenscheibe (111), der zweiten Antriebsriemenscheibe (112), der ersten Abtriebsriemenscheibe (114) und der zweiten Abtriebsriemenscheibe (113) befestigt sind.

6. Differentialkugelgelenk nach einem oder mehreren der Ansprüche 2 bis 5, wobei der zentrale Körper (160) eine sechsseitige Quaderform aufweist mit:

- zwei gegenüberliegenden ersten Flächen (161), die senkrecht zu der ersten Achse (10) verlaufen und zwei jeweilige Aussparungen mit zylindrischem Querschnitt zur Aufnahme der Antriebsriemenscheiben (111, 112) umfassen;

- zwei gegenüberliegenden zweiten Flächen (162), die senkrecht zu der zweiten Achse (20) verlaufen und zwei jeweilige Naben (150) umfassen, die dazu ausgebildet sind, die Abtriebsriemenscheiben (113, 114) zu stützen; und

- zwei gegenüberliegenden dritten Flächen (163), die senkrecht zu der dritten Achse (30) verlaufen;

wobei:

- auf jeder der beiden ersten Flächen (161) zwei erste Umlenkscheiben (121) an den Ecken zwischen den beiden ersten Flächen (161) und einer der beiden zweiten Flächen (162) angeordnet sind, die in eine erste Richtung der Achse (20) ausgerichtet sind; und

- auf jeder der beiden dritten Flächen (163) zwei zweite Umlenkscheiben (122) an den Ecken zwischen den dritten Flächen (163) und einer der zweiten Flächen (162) angeordnet sind, die in eine zweite Richtung der Achse (20) ausgerichtet sind, die der ersten Richtung entgegengesetzt ist;

und wobei jede der ersten und zweiten Umlenkscheibe (121, 122) eine jeweilige Drehachse senkrecht zu der Fläche (161, 162, 163) aufweist, auf der sie angeordnet ist.

7. Differentialkugelgelenk nach einem oder mehreren der Ansprüche 2 bis 6, wobei die erste Abtriebsriemenscheibe (114) und die zweite Abtriebsriemenscheibe (113) eine Vielzahl von Löchern (116) umfassen, die zum Aufnehmen von Durchgangsschrauben zum Koppeln des Differentialkugelgelenks (100) mit einem Glied eines Roboters ausgebildet sind.

8. Roboter, wobei der Roboter ein oder mehrere Glieder (300) umfasst, die mit jeweils einem oder mehreren Differentialkugelgelenken (100) nach einem der Ansprüche 1 bis 7 gekoppelt sind.

9. Roboter nach Anspruch 8, wobei das eine oder die mehreren Differentialkugelgelenke (100) Anspruch 1 oder Anspruch 4 entsprechen und das eine oder die mehreren Glieder (300) mit jeweils einem oder mehreren Differentialkugelgelenken (100) an der ersten (113) und der zweiten (114) Abtriebsriemenscheibe gekoppelt sind.

10. Verfahren zum Bewegen eines Glieds eines Roboters in zwei senkrecht zueinander verlaufende Richtungen, **dadurch gekennzeichnet, dass** die folgenden Schritte ausgeführt werden:

   A. Bereitstellen eines Roboters nach Anspruch 8 oder 9;
   B. alternativ:

   B1. Betätigen des ersten Übertragungsmittels (131) und des zweiten Übertragungsmittels (132) mit Drehungen in die gleiche Richtung, um die Bewegung des Glieds (300) auf einer ersten Ebene zu erreichen; oder
   B2. Betätigen des ersten Übertragungsmittels (131) und des zweiten Übertragungsmittels (132) mit Drehungen in entgegengesetzte Richtungen, um die Bewegung des Glieds (300) auf einer zweiten Ebene senkrecht zu der ersten Ebene zu erreichen.

**Revendications**

1. Articulation sphérique différentielle (100) comprenant une pluralité de poulies, une pluralité de moyens de transmission de mouvement rotatif pouvant être reliés à des actionneurs respectifs, et une pluralité d'éléments linéaires flexibles tendus conçus pour transmettre le mouvement entre les poulies de ladite pluralité de poulies, dans laquelle :

   - la pluralité de poulies comprend une première poulie motrice (111) et une seconde poulie motrice (112) dont leurs centres respectifs se trouve à une distance réciproque prédéfinie (d1) le long d'un premier axe (10) de façon à pouvoir tourner indépendamment l'une de l'autre;
   - la pluralité de moyens de transmission de mouvement rotatif comprend un premier moyen de transmission (131) relié à ladite première poulie motrice (111) ainsi qu'un second moyen de transmission (132) relié à ladite seconde poulie motrice (112) de façon que ledit premier axe (10) soit l'axe par rapport auquel le premier moyen de transmission (131) et le second moyen de transmission (132) transmettent le mouvement rotatif respectif ;
   - la pluralité de poulies comprend en outre une première poulie menée (114) pouvant tourner le long d'un deuxième axe (20) perpendiculaire audit premier axe (10) ;
   - ladite pluralité d'éléments linéaires flexibles tendus comprend un premier élément linéaire flexible tendu (151) et un second élément linéaire flexible tendu (152) qui effectuent une révolution complète sur ladite première poulie motrice (111) et sur ladite seconde poulie motrice (112), respectivement, pour ensuite sortir à chaque fois en des points diamétralement opposés de la poulie motrice (111, 112) respective, s'enrouler autour de ladite première poulie menée (114), et revenir à ladite poulie motrice (111, 112) respective, formant ainsi une trajectoire fermée ;
   - la pluralité de poulies comprend en outre quatre premières poulies de renvoi (121, 122) sur lesquelles lesdits premier (151) et second (152) éléments flexibles tendus coulissent sur environ un quart de tour et passent à chaque fois de la première ou de la seconde poulie motrice (111, 112) à la première poulie menée (114) ;
   - les quatre premières poulies de renvoi (121) présentent des axes de rotation qui sont parallèles - dans un angle de tolérance prédéfini - audit premier axe (10) ;
   - les quatre premières poulies de renvoi (121) sont agencées sur le côté de ladite première poulie menée (113, 114) aux coins d'un quadrilatère inscrivant ladite première poulie menée (114) ;

   dans lequel il est prévu un corps central (160) conçu pour loger et supporter au moins ladite première poulie menée (114) et lesdites poulies de renvoi (121) et pour tourner librement autour du premier axe (10) par rapport à la fois à ladite première (111) et à la seconde (112) poulie motrice ;

l'articulation étant **caractérisée en ce que** :
lesdits premiers moyens de transmission (131) et lesdits seconds moyens de transmission (132) sont un premier arbre et un second arbre agencés le long dudit premier axe (10), en particulier ledit premier arbre (131) présente un plus petit diamètre et est au moins partiellement entouré par ledit second arbre (132) présentant un plus grand diamètre.

2. Articulation sphérique différentielle selon la revendication 1, dans laquelle ladite pluralité de poulies comprend :

- une seconde poulie menée (113) pouvant tourner le long dudit second axe (20) placée à une distance prédéfinie (d2) de ladite première poulie menée (114) ;
- quatre secondes poulies de renvoi (122) sur lesquelles lesdits premier (151) et second (152) éléments flexibles tendus glissent encore sur environ un quart de tour et vont à chaque fois des première et seconde poulies motrices (111, 112) à la fois à la première poulie menée (114) et la seconde poulie menée (113), respectivement ;
- les quatre secondes poulies de renvoi (122) présentent des axes de rotation qui sont parallèles - dans un angle de tolérance prédéfini - à un troisième axe (30) perpendiculaire audit premier axe (10) et audit deuxième axe (20) ;
- les quatre secondes poulies de renvoi (122) sont disposées sur le côté de ladite seconde poulie menée (113) aux coins d'un quadrilatère inscrivant ladite seconde poulie menée (113) ; et
- ledit premier élément linéaire flexible tendu (151) et ledit second élément linéaire flexible tendu (152) sortent dans des directions opposées depuis lesdits deux points diamétralement opposés de la poulie motrice (111, 112) respectives, passent à travers deux des premières poulies de renvoi (121) et deux des secondes poulies de renvoi (122), s'enroulent autour de ladite première poulie menée (114) et de ladite seconde poulie menée (113), et pour finir reviennent à ladite poulie motrice (111, 112) respective, formant ainsi une trajectoire fermée.

3. Articulation sphérique différentielle selon la revendication 1 ou 2, dans laquelle ledit premier élément linéaire flexible tendu (151) et ledit second élément linéaire flexible tendu (152) sont choisis parmi des chaînes, des courroies ou d'autres systèmes de transmission similaires.

4. Articulation sphérique différentielle selon une ou plusieurs des revendications 1 à 3, dans laquelle ledit premier élément linéaire flexible tendu (151) et ledit second élément linéaire flexible tendu (152) sont des câbles.

5. Articulation sphérique différentielle selon les revendications 2 et 4, dans laquelle lesdits câbles sont fixés en un ou plusieurs points de fixation (118) sur chacune desdites première poulie motrice (111), seconde poulie motrice (112), première poulie menée (114) et seconde poulie menée (113).

6. Articulation sphérique différentielle selon une ou plusieurs des revendications 2 à 5, dans laquelle le corps central (160) présente une forme cuboïde à six côtés avec :

- deux premières faces opposées (161) perpendiculaires au premier axe (10), comprenant deux évidements respectifs à section cylindrique pour loger les poulies motrices (111, 112) ;
- deux deuxièmes faces opposées (162) perpendiculaires au deuxième axe (20), comprenant deux moyeux respectifs (150) conçus pour supporter les poulies menées (113, 114) ; et
- deux troisièmes faces opposées (163) perpendiculaires au troisième axe (30) ;
dans laquelle :
- sur chacune des deux premières faces (161) sont agencées deux premières poulies de renvoi (121) aux angles entre les deux premières faces (161) et l'une des deux secondes faces (162) orientées dans une première direction de l'axe (20) ; et
- sur chacune des deux troisièmes faces (163) sont agencées deux secondes poulies de renvoi (122) aux angles entre les troisièmes faces (163) et l'une des deuxièmes faces (162) orientées dans une seconde direction de l'axe (20), opposée à ladite première direction ;

et dans laquelle chacune des première et seconde poulies de renvoi (121, 122) présente un axe de rotation respectif perpendiculaire à la face (161, 162, 163) sur laquelle elle est située.

7. Articulation sphérique différentielle selon une ou plusieurs des revendications 2 à 6, dans laquelle la première poulie menée (114) et la seconde poulie menée (113) comprennent une pluralité de trous (116) conçus pour recevoir des vis traversantes pour accoupler l'articulation à rotule différentielle (100) à un membre d'un robot.

8. Robot, le robot comprenant un ou plusieurs membres (300) accouplés à une ou plusieurs articulations sphériques différentielles (100) respectives selon l'une des revendications 1 à 7.

**9.** Robot selon la revendication 8, dans lequel la ou les articulations sphériques différentielles (100) sont selon la revendication 1 ou selon la revendication 4, et le ou les membres (300) sont accouplés à une ou plusieurs articulations sphériques différentielles (100) respectives sur ladite première (113) et ladite seconde (114) poulies menées.

**10.** Procédé de déplacement d'un membre d'un robot dans deux directions perpendiculaires, **caractérisé en ce que** les étapes suivantes sont réalisées :

    A. fournir un robot selon la revendication 8 ou 9 ;
    B. en variante :

        B1. actionner ledit premier moyen de transmission (131) et ledit second moyen de transmission (132) avec des rotations dans les mêmes directions pour obtenir le mouvement du membre (300) sur un premier plan ; ou
        B2. actionner ledit premier moyen de transmission (131) et ledit second moyen de transmission (132) avec des rotations dans des directions opposées pour obtenir le mouvement du membre (300) sur un second plan perpendiculaire au premier plan.

## FIG.1
(PRIOR ART)

Ab/Ad Actuator

Hip Actuator

Knee Actuator

Upper Link

Belt

Lower Link

Foot

## FIG.2
(PRIOR ART)

**FIG.3**
(PRIOR ART)

(a)

(b)

**FIG.4**
(PRIOR ART)

(a)

(b)

2 DOF joint

Path change module

X2 Actuator Module

Frame

Main Rotation Axis

Secondary Rotation Axis

Ball Bearing Screw

Cable Return Module

# FIG.5
(PRIOR ART)

**FIG.6**

**FIG.7**

**FIG.8**

**FIG.9**

**FIG.10**

113 121 111 151 100

20

152

10

112

118

114

122

a) 100

200

b) 100

300

200

**FIG.11**

200

100

200

**FIG.12**

**REFERENCES CITED IN THE DESCRIPTION**

**Patent documents cited in the description**

- US 5046375 A
- JP S6176296 B
- US 5697256 A
- JP 2018065198 A
- EP 3715061 A